**Europäisches Patentamt**

**European Patent Office**

**Office européen des brevets**

(19)

(11) Veröffentlichungsnummer : **0 355 343 B1**

(12) # EUROPÄISCHE PATENTSCHRIFT

(45) Veröffentlichungstag der Patentschrift :
**21.10.92 Patentblatt 92/43**

(51) Int. Cl.$^5$ : **B01F 15/00**

(21) Anmeldenummer : **89112231.9**

(22) Anmeldetag : **05.07.89**

(54) **Lebensmittelverarbeitungsmaschine.**

(30) Priorität : **02.08.88 DE 8809812 U**

(43) Veröffentlichungstag der Anmeldung :
**28.02.90 Patentblatt 90/09**

(45) Bekanntmachung des Hinweises auf die
Patenterteilung :
**21.10.92 Patentblatt 92/43**

(84) Benannte Vertragsstaaten :
**AT BE CH DE ES FR GB IT LI NL SE**

(56) Entgegenhaltungen :
**BE-A- 571 304**
**CH-A- 615 739**
**DE-B- 1 232 113**
**FR-A- 2 266 540**
**FR-A- 2 560 031**
**US-A- 3 233 837**

(73) Patentinhaber : **A. STEPHAN U. SÖHNE GMBH
& CO.
Stephanplatz 2
W-3250 Hameln 1 (DE)**

(72) Erfinder : **Otto, Friedrich
Reuterweg 21
3250 Hameln 1 (DE)**

(74) Vertreter : **Gramm, Werner, Prof. Dipl.-Ing. et al
Patentanwälte Gramm + Lins
Theodor-Heuss-Strasse 2
W-3300 Braunschweig (DE)**

EP 0 355 343 B1

## Beschreibung

Die Erfindung betrifft eine Maschine zur Verarbeitung von Lebensmitteln oder zur Herstellung flüssiger oder pastöser Pharmazie- und Chemieprodukte, mit einer Schüssel, durch deren Schüsselboden eine lotrecht in die Schüssel ragende Motorwelle eines unterhalb der Schüssel angeordneten Motors geführt ist, und mit einer die Motorwelle gegen den Schüsselboden vakuumdicht abdichtenden Wellendichtung.

Eine derartige Ausführungsform läßt sich dem US-A-3,612,546 entnehmen. Hier besteht die Wellendichtung aus zwei hintereinander angeordneten Lippendichtungen und einer an der Innenseite der Schüsselwandung festgelegten Deckplatte, wobei die beiden Lippendichtungen in die als Abdichtflansch ausgebildete Deckplatte eingebaut sind, die mit einem ein Außengewinde tragenden Hals in die Schüsselwandung eingeschraubt ist. Die beiden Lippendichtungen bestehen aus einer Hutmanschette und einem Simmerring, die in dem Hals des Abdichtflansches sitzen und mit diesem eine Baueinheit bilden. Die Hutmanschette liegt mit ihrem Hutrand gegen die Schulter eines durch Preßsitz im Hals des Abdichtflansches festgelegten Ringes an und ist in dieser Lage durch den in den Ring eingepreßten Simmerring gehalten. Der Abdichtflansch ist mit seinem Hals in einen Gewindering geschraubt, der die Schüsselwandung durchdringt und gegen diese von außen mit einer Schulter anliegt.

Der Erfindung liegt die Aufgabe zugrunde, bei der eingangs erläuterten Maschine die Wellendichtung einfacher und somit preiswerter zu gestalten und hinsichtlich der Handhabung zu vereinfachen.

Diese Aufgabe wird gemäß der Erfindung durch folgende Merkmale gelöst:

a) auf das freie Ende der Motorwelle ist ein hutförmiger Dichtungsträger geschoben, der unterhalb der montierten Schüssel auf einer Schulter o.dgl. der Motorwelle aufliegt und mit einem unteren umlaufenden Hutrand einen die Motorwelle umschließenden stationären Gehäusering labyrinthartig mit lichtem Abstand übergreift;

b) der Dichtungsträger ist über einen in einer Ringnut der Motorwelle liegenden O-Ring geschoben;

c) in dem oberen Abschnitt des Dichtungsträgers ist ein V-Ring als Dichtungsring lose eingesetzt, der mit einem oberen V-Schenkel die Wellendurchtrittsöffnung im Schüsselboden umschließt und bei montierter Schüssel unter radialer Vorspannung vakuumdicht auf der Motorwelle sitzt und mit seinem oberen V-Schenkel unter Axialspannung gegen die Unterseite des Schüsselbodens anliegt.

Dabei ist es zweckmäßig, wenn der V-Ring mit seinem unteren V-Schenkel in eine radial innen offene Ringnut des Dichtungsträgers lose eingeschoben ist.

Die erfindungsgemäße Motorwellen- und Schüsselabdichtung weist einen besonders einfachen Aufbau auf, sie ist einfach in der Handhabung, preiswert in der Herstellung und ermöglicht ein einfaches Abziehen bzw. Aufsetzen der Schüssel.

Weitere Merkmale der Erfindung sind Gegenstand der Unteransprüche und werden in Verbindung mit weiteren Vorteilen der Erfindung anhand eines Ausführungsbeispieles näher erläutert.

In der Zeichnung ist eine als Beispiel dienende Ausführungsform der Erfindung dargestellt. Es zeigen:

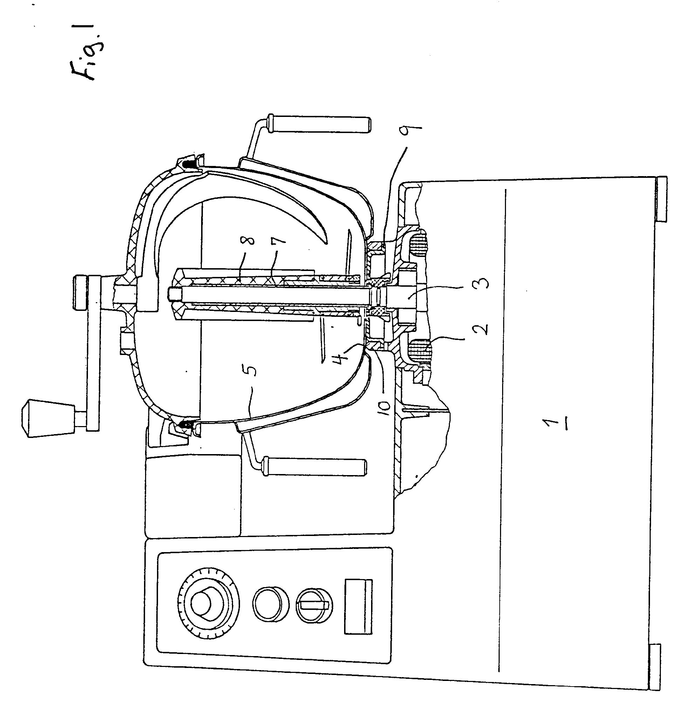

Figur 1 in Vorderansicht und zum Teil im Längsschnitt eine Universalmaschine und

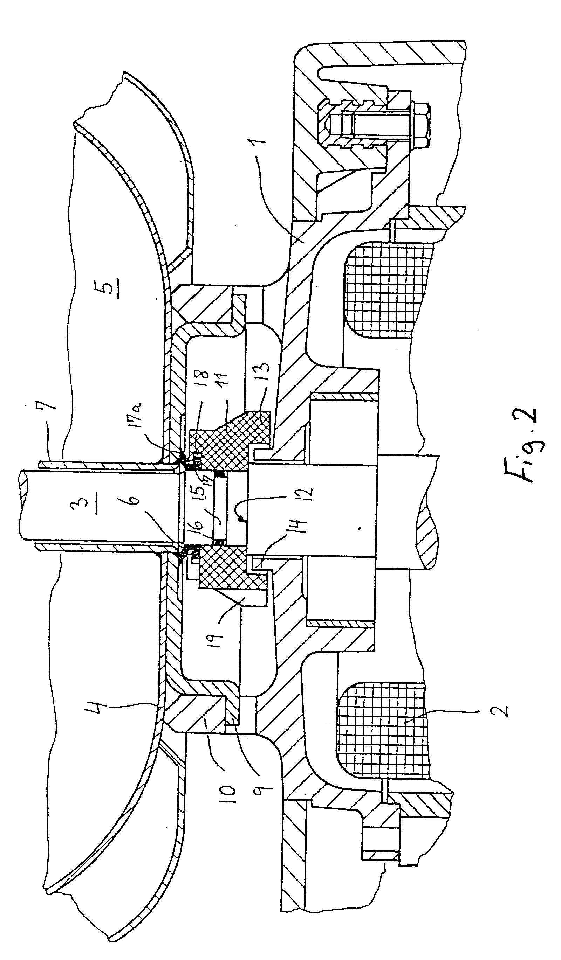

Figur 2 in vergrößertem Maßstab ein Detail der Figur 1.

Die dargestellte Maschine besteht aus einem Ständer 1, der u.a. einen Motor 2 umschließt, dessen Motorwelle 3 zentrisch durch den Schüsselboden 4 einer Schüssel 5 geführt ist und lotrecht nach oben in diese Schüssel 5 ragt. In die Wellendurchtrittsöffnung 6 des Schüsselbodens 4 ist ein Standrohr 7 eingeschweißt, das von einem Werkzeugträger 8 berührungsfrei übergriffen wird, der drehfest auf dem oberen freien Ende der Motorwelle 3 montiert ist. Das Standrohr 7 ragt über den größtmöglichen Füllstand innerhalb der Schüssel 5 hinaus.

Die Schüssel 5 ist auf dem Ständer 1 über einen Bajonettverschluß leicht lösbar festgelegt. Hierfür sind am Schüsselboden 4 winkelförmige Kupplungsstücke 9 vorgesehen, die beim lotrechten Aufsetzen der Schüssel 5 in nicht näher dargestellte lotrecht verlaufende Führungsnuten im Ständer 1 eingreifen, um dann bei einer Verdrehung der Schüssel 5 um ihre Mittelachse jeweils eine am Ständer 1 vorgesehene Rast 10 zu untergreifen.

Die Motorwelle 3 wird gegenüber dem Schüsselboden 4 durch eine Wellendichtung vakuumdicht abgedichtet, die folgenden Aufbau aufweist:

Auf das freie Ende der Motorwelle 3 ist ein hutförmiger, vorzugsweise aus Kunststoff bestehender Dichtungsträger 11 geschoben, der unterhalb der montierten Schüssel 5 auf einer Schulter 12 der Motorwelle 3 aufliegt und mit einem unteren umlaufenden Hutrand 13 einen die Motorwelle 3 umschließenden stationären Gehäusering 14 des Ständers 1 labyrinthartig mit lichtem Abstand übergreift. Dabei ist der Dichtungsträger 11 über einen in einer Ringnut 15 der Motorwelle 3 liegenden O-Ring 16 geschoben. In dem oberen Abschnitt des Dichtungsträgers 11 ist ein V-Ring 17 mit seinem unteren V-Schenkel in eine radial innen offene Ringnut 18 des Dichtungsträgers 11 lose eingeschoben. Der obere V-Schenkel 17a umschließt die Wellendurchtrittsöffnung 6 im Schüsselboden 4 und liegt bei montierter Schüssel 5 unter Axialspannung gegen die Unterseite des Schüsselbodens 4 an. Ferner sitzt der V-Ring 17 bei montierter Schüssel 5 unter radialer Vorspannung vakuumdicht auf der Motorwelle 3.

Der Dichtungsträger 11 weist auf seinem Außenmantel zumindest eine, vorzugsweise aber zumindest zwei angenähert lotrechte Schleuderrippen 19 auf.

Es ist erkennbar, daß sich die Schüssel 5 nach entsprechender Drehung um ihre Mittelachse von dem Ständer 1 lösen und in einfacher Weise nach oben von der Motorwelle 3 abziehen läßt. Hierbei erfolgt lediglich eine Entspannung des V-Ringes 17 jedoch keinerlei gleitende Relativverschiebung zwischen dem Schüsselboden 4 bzw. seinem Standrohr 7 und einem Dichtungsring 16,17. Durch bloßes Aufsetzen der Schüssel 5 und ihre Verriegelung mit dem Ständer 1 erfolgt eine axial gerichtete Beaufschlagung des oberen V-Schenkels 17a; diese Lippe wird dadurch unter den Schüsselboden 4 gepreßt und dichtet gegen ein in der Schüssel 5 ggf. befindliches Vakuum ab. Es wird also durch bloßes Aufsetzen und verriegeln der Schüssel 5 automatisch die Vakuumdichtheit (wieder) hergestellt.

Der V-Ring ist als Verschleißteil zu betrachten und kann nur dann ausgetauscht werden, wenn der gesamte Dichtungsträger 11 nach oben über die Motorwelle 3 abgezogen wird. Bei aufgeschobenem Dichtungsträger 11 kann somit der V-Ring 17 auch dann nicht verloren gehen, wenn die Schüssel 5 abgenommen ist.

Der Dichtungsträger 11 bildet gegenüber dem stationären Gehäusering 14 ein Labyrinth, um den normalerweise lotrecht angeordneten Motor 2 vor dem Eindringen von Wasser zu schützen und zwar sowohl bei laufendem wie auch bei stillstehendem Motor. Durch die Schleuderrippe 19 ist sichergestellt, daß während des Rotierens der Motorwelle 3 Wasser oder sonstige Flüssigkeit radial weggeschleudert wird. Der Dichtungsträger 11 läßt sich leicht montieren und demontieren und sitzt aufgrund des vorgesehenen handelsüblichen O-Ringes 16 fest und vakuumdicht auf der Motorwelle 3. Auch der V-Ring 17 läßt sich nach dem Abziehen des Dichtungsträgers 11 leicht montieren bzw. demontieren. Im montierten Zustand sitzt der V-Ring 17 durch entsprechende Vorspannung vakuumdicht auf der Motorwelle.

Die erfindungsgemäße Motorwellen- und Schüsselabdichtung läßt sich somit leicht handhaben und ist preiswert in der Herstellung.

**Patentansprüche**

1. Maschine zur Verarbeitung von Lebensmitteln oder zur Herstellung flüssiger oder pastöser Pharmazie- und Chemieprodukte, mit einer Schüssel (5), durch deren Schüsselboden (4) eine lotrecht in die Schüssel (5) ragende Motorwelle (3) eines unterhalb der Schüssel (5) angeordneten Motors (2) geführt ist, und mit einer die Motorwelle (3) gegen den Schüsselboden (4) vakuumdicht abdichtenden Wellendichtung (11,13,16,17), gekennzeichnet durch folgende Merkmale:

a) auf das freie Ende der Motorwelle (3) ist ein hutförmiger Dichtungsträger (11) geschoben, der unterhalb der montierten Schüssel (5) auf einer Schulter (12) o.dgl. der Motorwelle (3) aufliegt und mit einem unteren umlaufenden Hutrand (13) einen die Motorwelle (3) umschließenden stationären Gehäusering (14) labyrinthartig mit lichtem Abstand übergreift;

b) der Dichtungsträger (11) ist über einen in einer Ringnut (15) der Motorwelle (3) liegenden O-Ring (16) geschoben;

c) in dem oberen Abschnitt des Dichtungsträgers (11) ist ein V-Ring (17) als Dichtungsring lose eingesetzt, der mit einem oberen V-Schenkel (17a) die Wellendurchtrittsöffnung (6) im Schüsselboden (4) umschließt und bei montierter Schüssel (5) unter radialer Vorspannung vakuumdicht auf der Motorwelle (3) sitzt und mit seinem oberen V-Schenkel (17a) unter Axialspannung gegen die Unterseite des Schüsselbodens (4) anliegt.

2. Maschine nach Anspruch 1, dadurch gekennzeichnet, daß der V-Ring (17) mit seinem unteren V-Schenkel in eine radial innen offene Ringnut (18) des Dichtungsträgers (11) lose eingeschoben ist.

3. Maschine nach Anspruch 1 oder 2, dadurch gekennzeichnet, daß der Dichtungsträger (11) auf seinem Außenmantel zumindest eine angenähert lotrechte Schleuderrippe (19) aufweist.

4. Maschine nach Anspruch 1, 2 oder 3, dadurch gekennzeichnet, daß der Dichtungsträger (11) aus Kunststoff besteht.

**Claims**

1. Machine for processing foodstuffs or for producing liquid or pasty pharmaceutical and chemical products, having a bowl (5) through the bowl base (4) of which there is guided a motor shaft (3), which projects vertically into the bowl (5), of a motor (2) arranged below the bowl (5), and having a shaft seal (11, 13, 16, 17) which seals the motor shaft (3) in vacuum-tight manner against the bowl base (4), characterized by the following features:

a) pushed onto the free end of the motor shaft (3) is a hat-shaped seal carrier (11) which bears below the assembled bowl (5) against a shoulder (12) or the like of the motor shaft (3) and by means of a lower peripheral hat edge (13) reaches, in the manner of a labyrinth, with clearance around a stationary housing ring (14) surrounding the motor shaft (3);

b) the seal carrier (11) is pushed over an O ring (16) lying in an annular groove (15) of the motor shaft (3);

c) there is set loosely in the upper section of the seal carrier (11) a V ring (17) as a sealing ring which, by means of an upper V leg (17a), surrounds the shaft passage opening (6) in the bowl base (4) and, when the bowl (5) is mounted, is seated on the motor shaft (3) with radial pre-tension in vacuum-tight manner and bears by means of its upper V leg (17a) with axial tension against the underside of the bowl base (4).

2. Machine according to Claim 1, characterized in that by means of its lower V leg the V ring (17) is pushed loosely into a radially inwardly open annular groove (18) of the seal carrier (11).

3. Machine according to Claim 1 or 2, characterized in that the seal carrier (11) has on its outer surface at least one approximately vertical spinning rib (19).

4. Machine according to Claim 1, 2 or 3, characterized in that the seal carrier (11) is of plastics.

**Revendications**

1. Machine de traitement d'aliments ou de préparation de produits pharmaceutiques ou chimiques liquides ou pâteux, avec un bol (5) dont le fond (4) est traversé par un arbre moteur (3) débordant verticalement dans le bol (5) et relié à un moteur (2) installé en-dessous du bol, et avec un joint d'arbre (11, 13, 16, 17) assurant l'étanchéité sous vide de l'arbre moteur (3) à travers le fond (4) du bol, caractérisée par les caractéristiques suivantes:

a) un porte-bourrage (11) en forme de chapeau est enfoncé sur l'extrémité libre de l'arbre moteur (3) et repose en-dessous du bol (5) monté, sur un épaulement (12) ou similaire, un bord (13) inférieur circulaire de chapeau enserrant à labyrinthe et à écartement un anneau stationnaire (14) de boîtier entourant l'arbre moteur (3);

b) le porte-bourrage (11) est enfoncé sur un joint torique (16) placé dans une gorge annulaire (15) de l'arbre moteur;

c) dans le segment supérieur du porte-bourrage (11) est inséré un anneau de section en V (17) servant d'anneau d'étanchéité, dont une aile supérieure (17a) du V entoure l'ouverture de passage (6) de l'arbre moteur dans le fond (4) du bol et repose à étanchéité sous précontrainte radiale, sur l'arbre moteur (3) lorsque le bol (5) est monté, l'aile supérieure (17a) du V reposant contre la face inférieure du fond (4) du bol, sous contrainte axiale.

2. Machine selon la revendication 1, caractérisées en ce que l'aile inférieure de l'anneau (17) en V est enfoncée de manière lâche dans une gorge annulaire (18), radialement ouverte vers l'intérieur, du porte-bourrage (11).

3. Machine selon la revendication 1 ou 2, caractérisée en ce que le porte-bourrage (11) présente sur son enveloppe extérieure au moins une nervure centrifuge (19) approximativement verticale.

4. Machine selon la revendication 1, 2 ou 3, caractérisée en ce que le porte-bourrage (11) est en matière synthétique.

Fig. 1

Fig.2

EP 0 355 343 B1